(19) Europäisches Patentamt
European Patent Office
Office européen des brevets

(11) **EP 4 266 422 A1**

(12) **EUROPEAN PATENT APPLICATION**
published in accordance with Art. 153(4) EPC

(43) Date of publication:
**25.10.2023 Bulletin 2023/43**

(21) Application number: **21911356.0**

(22) Date of filing: **13.12.2021**

(51) International Patent Classification (IPC):
$H01M \ 4/525^{(2010.01)}$ $\qquad H01M \ 4/505^{(2010.01)}$
$H01M \ 10/052^{(2010.01)}$

(52) Cooperative Patent Classification (CPC):
**H01M 4/505; H01M 4/525; H01M 10/052;**
Y02E 60/10

(86) International application number:
**PCT/KR2021/018829**

(87) International publication number:
**WO 2022/139289 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020 KR 20200179686**

(71) Applicants:
• **POSCO Holdings Inc.**
  **Seoul 06194 (KR)**
• **RESEARCH INSTITUTE OF INDUSTRIAL
  SCIENCE &
  TECHNOLOGY**
  **Pohang-si, Gyeongsangbuk-do 37673 (KR)**
• **POSCO Chemical Co., Ltd**
  **Gyeongsangbuk-do 37918 (KR)**

(72) Inventors:
• **SONG, Jung Hoon**
  **Gwacheon-si, Gyeonggi-do 13835 (KR)**
• **NAM, Sang Cheol**
  **Seoul 02587 (KR)**
• **LEE, Sanghyuk**
  **Incheon 22405 (KR)**
• **CHOI, Kwon Young**
  **Seoul 07987 (KR)**
• **PARK, Inchul**
  **Incheon 22008 (KR)**
• **KWON, Ohmin**
  **Incheon 22018 (KR)**

(74) Representative: **Potter Clarkson**
  **Chapel Quarter**
  **Mount Street**
  **Nottingham NG1 6HQ (GB)**

(54) **CATHODE ACTIVE MATERIAL, AND LITHIUM ION BATTERY INCLUDING SAME**

(57) The present exemplary embodiments relate to a positive electrode active material and a lithium secondary battery including the same. According to an exemplary embodiment, a positive electrode active material for a lithium secondary battery including a metal oxide particle including nickel, cobalt, manganese and aluminum, and three types of doping elements doped on the metal oxide particle is provided.

EP 4 266 422 A1

## Description

**Field of the Invention**

The present exemplary embodiments relate to a positive electrode active material and a lithium secondary battery including the same.

**Description of the Related Art**

Recently, due to the explosive demand for electric vehicles and the demand for increased mileage, the development of secondary batteries with high-capacity and a high energy density that can be applied to them is actively progressing worldwide. Particularly, in order to manufacture such a high-capacity battery, a high-capacity positive electrode active material must be used. Accordingly, a method of applying a nickel-cobalt-manganese based positive electrode active material having a high nickel content as a high-capacity positive electrode active material has been proposed. However, the nickel cobalt manganese positive electrode active material with high nickel content resultantly as the nickel content increases, has problems below. 1) efficiency reduction due to capacity reduction

2) formation of NiO rock salt structure due to surface oxygen generation and cycle characteristics deteriorated, and 3) resistance increase. Therefore, it is urgent to develop a positive electrode active material that can solve the problem of a nickel cobalt manganese positive electrode active material with a high nickel content.

## SUMMARY OF THE INVENTION

In the present embodiment, metal oxide particles including nickel, cobalt, manganese and aluminum are doped with three types of elements to solve the problem of performance deteriorated in positive electrode active materials with high nickel content and to significantly improve electrochemical characteristics at the same time. Accordingly, it is intended to provide a positive electrode active material and a lithium secondary battery containing it.

A positive electrode active material for a lithium secondary battery according to an exemplary embodiment may include a metal oxide particle including nickel, cobalt, manganese, and aluminum, and three types of doping elements doped on the metal oxide particle.

The three kinds of doping elements may be Nb, B and Zr.

The doping amount of the Nb may range from 0.00001 mol to 0.03 mol based on 1 mol of the total of nickel, cobalt, manganese, aluminum and doping elements.

The doping amount of the B may range from 0.001 mole to 0.02 mole based on 1 mole of the total of nickel, cobalt, manganese, aluminum and doping elements.

The doping amount of the Zr may range from 0.001 mol to 0.007 mol based on 1 mol of the total of nickel, cobalt, manganese, aluminum and doping elements.

The doping amount of the Nb and Zr may satisfy the relationship of Equation 1 below.

$$[\text{Equation 1}]$$

$$0.5 < [Zr]/[Nb] < 10$$

(In Equation 1, [Nb] and [Zr] mean the doping amount of each element based on 1 mole of the total sum of nickel, cobalt, manganese, aluminum and doping elements)

The doping amounts of the Nb and B may satisfy the relationship of Equation 2 below.

$$[\text{Equation 2}]$$

$$0.3 < [B]/[Nb] < 30$$

(In Equation 1, [Nb] and [B] mean the doping amount of each element based on 1 mole of the total sum of nickel, cobalt, manganese, aluminum and doping elements)

The positive electrode active material may be represented by Chemical Formula 1 below.

[Chemical Formula 1]    $Li_a[Ni_xCo_yMn_zAl_h]_{1-t}(Nb_iZr_jB_k)_tO_{2-p}X2_p$

(In the Chemical Formula 1,

X is one or more elements selected from the group containing F, N, and P, and Zr

a is $0.8 \leq a \leq 1.3$,

t is $0.0061 \leq t \leq 0.057$,

$0.6 \leq x \leq 0.95$, $0 < y \leq 0.2$, $0 < z \leq 0.2$, $0.008 \leq h \leq 0.029$, $0.0001 \leq i \leq 0.03$, $0.001 \leq j \leq 0.007$, $0.005) \leq k \leq 0.02$, and $0 \leq p \leq 0.02$.

The h may be $0.005 \leq h \leq 0.025$ range.

An initial diffusion coefficient of the positive electrode active material is $7.30*10^{-9}m^2/sec$ to $8.10*10^{-9}m^2/sec$ range.

A grain size of the metal oxide particle is 1,000Å to 1,560Å.

A full width at half maximum (FWHM) value for (110) plane of the metal oxide particle ranged from 0.1901 to 0.2017.

When measuring the X-ray diffraction pattern, the positive electrode active material has a 1.2350 to 1.2410 of I(003)/I(104), which is the ratio of the peak intensity of the (003) plane to the peak intensity of the (104) plane.

The content of nickel in the metal oxide particle may be 0.8 mol or more based on 1 mol of the total of the nickel, cobalt, manganese and aluminum.

A lithium secondary battery according to another exemplary embodiment may include a positive electrode including a positive electrode active material according to an exemplary embodiment, a negative electrode, and a non-aqueous electrolyte.

When the positive electrode active material according to the present embodiment is applied by doping at least two elements to a metal oxide particle including NCMA, it can significantly improve the room temperature / high temperature cycle-life characteristic, initial efficiency, initial resistance, resistance increase rate and thermal stability, while increasing the capacity of a lithium secondary battery.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

A positive electrode active material for a lithium secondary battery according to an exemplary embodiment may include a metal oxide particle including nickel, cobalt, manganese, and aluminum, and three types of doping elements doped on the metal oxide particle.

At this time, the three types of doping elements may be Nb, Zr and B.

Selection of the doping element is important to secure cycle-life and various electrochemical performance by doping lithium metal oxide. Doping elements known to date include monovalent ions such as $Ag^+$ and $Na^+$; and divalent or multi-valent ions such as $Co^{2+}$, $Cu^{2+}$, $Mg^{2+}$, $Zn^{2+}$, $Ba^{2+}$, $Al^{3+}$, $Fe^{3+}$, $Cr^{3+}$, $Ga^{3+}$, $Zr^{4+}$, $Ti^{4+}$. Each of these elements has a different effect on the cycle-life and output characteristics of the battery.

In the present embodiment, by including Zr, Nb and B among these doping elements, room temperature and high temperature cycle-life characteristic and thermal stability can be improved while securing high capacity, and initial resistance characteristic and resistance increase rate can be significantly reduced.

Specifically, $Zr^{4+}$ serves as a kind of pillar because Zr ion occupies the Li site, and it relieves the contraction of the lithium ion path during the charging and discharging process to bring about stabilization of the layered structure. This phenomenon can increase cycle-life by reducing cation mixing and increasing lithium diffusion coefficient.

Also, Nb can improve initial capacity and initial efficiency.

When B (Boron) is doped with the doping element, the initial resistance can be reduced by reducing the crystal grain size during sintering of the positive electrode active material. In addition, it can increase the cycle-life characteristic and thermal decomposition temperature.

In the present embodiment, the doping amount of the Nb is 0.00001 mol to 0.03 mol, more specifically, 0.0001 mol to 0.01 mol, 0.00005 mol to 0.03 mol, or 0.0005 mole to 0.0025 mole. When the doping amount of Nb satisfies the range, a very advantageous effect can be realized in that room temperature cycle-life, high temperature cycle-life, resistance increase rate and average leakage current value of the lithium secondary battery can all be improved. In addition, the diffusion coefficient of the lithium secondary battery increases and the resistance increase rate can be effectively reduced during impedance analysis.

The doping amount of B may range from 0.001 mol to 0.02 mol, more specifically from 0.005 mol to 0.02 mol, and more specifically from 0.005 mol to 0.015 mol, based on 1 mol of the total of nickel, cobalt, manganese, aluminum and doping elements. When the doping amount of B satisfies the range, the initial resistance value can be reduced because the crystal grain size is reduced during sintering of the positive electrode active material, and the room temperature and high temperature cycle-life characteristic and thermal decomposition temperature can be increased.

Next, the doping amount of the Zr may range from 0.001 mol to 0.007 mol, more specifically, from 0.002 mol to 0.005 mol or 0.0035 mol to 0.005 mol, based on 1 mol of the total of nickel, cobalt, manganese, aluminum and doping elements. If the Zr doping amount satisfies the range, the high temperature cycle-life and room temperature cycle-life characteristics of the lithium secondary battery can be significantly improved.

In the present embodiment, the doping amount of the Nb and Zr may satisfy the relationship of Equation 1 below.

[Equation 1]

$$0.3 \leq [Zr]/[Nb] \leq 10$$

In Equation 1, [Nb] and [Zr] mean the doping amount of each element based on 1 mole of the total sum of nickel, cobalt, manganese, aluminum and doping elements.

More specifically, Equation 1 may be a range of 0.6 or more and 9 or less, or may be a range of 0.7 or more and 7 or less.

When Equation 1 satisfies the range, the resistance increase rate can be improved and the cycle characteristic becomes excellent.

Meanwhile, the doping amounts of the Nb and B may satisfy the relationship of Equation 2 below.

[Equation 2]

$$0.1 \leq [B]/[Nb] \leq 30$$

In Equation 2, [Nb] and [B] mean the doping amount of each element based on 1 mole of the total sum of nickel, cobalt, manganese, aluminum and doping elements.

More specifically, Equation 2 may be a range of 0.2 or more and 25 or less, or may be a range of 0.4 or more and 20 or less.

When Equation 2 satisfies the range, the stability is improved, the DSC temperature increases, and the cycle characteristic is improved.

A positive electrode active material for a lithium secondary battery in the present embodiment may be expressed as Chemical Formula 1 below.

[Chemical Formula 1]      $Li_a[Ni_xCo_yMn_zAl_h]_{1-t}(Nb_iZr_jB_k)_tO_{2-p}X2_p$

In the Chemical Formula 1,

X is one or more elements selected from the group containing F, N, and P, and Zr
a is $0.8 \leq a \leq 1.3$,

t is $0.0061 \leq t \leq 0.057$,
$0.6 \leq x \leq 0.95$, $0 < y \leq 0.2$, $0 < z \leq 0.2$, $0.008 \leq h \leq 0.029$, $0.0001 \leq i \leq 0.03$, $0.001 \leq j \leq 0.007$, $0.005) \leq k \leq 0.02$, and $0 \leq p \leq 0.02$.

In the present embodiment, the Al content range h may be in the range of 0.008 to 0.029, and more specifically, in the range of $0.005 \leq h \leq 0.025$. $Al^{3+}$ suppresses the deterioration of the layered structure into a spinel structure due to the migration of Al ions to the tetragonal lattice site. The layered structure facilitates the removal and insertion of Li ions, but the spinel structure does not allow Li ions to move smoothly. Therefore, when the content of Al in the positive electrode active material of the present exemplary embodiment satisfies the range, a lithium secondary battery with excellent initial efficiency and thermal stability and significantly improved room temperature cycle-life and high temperature cycle-life can be implemented

In addition, the content of the nickel in the present exemplary embodiment may be 0.8 mol or more, more specifically, 0.8 mol to 0.99 mol, 0.82 mol to 0.95 mol, or, or 0.83 mol to 0.92 mol based on 1 mol of the total of the nickel, cobalt, manganese, and aluminum.

As in the present embodiment, a positive electrode active material having a high-power characteristic can be realized when the content of nickel is 0.8 or more based on 1 mol of the total of the nickel, cobalt, manganese, and aluminum in the metal oxide. Since the positive electrode active material of the present exemplary embodiment having such a composition has a high energy density per volume, the capacity of a battery to which it is applied can be improved, and is also suitable for use in an electric vehicle.

On the other hand, the initial diffusion coefficient of the positive electrode active material according to the present embodiment is $7.30*10^{-9}m^2/sec$ to $8.10*10^{-9}m^2/sec$, more specifically $8.01*10^{-9}m^2/sec$ to $8.06*10^{-9}m^2$ sec range, $8.01*10^{-9}m^2/sec$ to $8.04*10^{-9}m^2/sec$, or $8.01*10^{-9}m^2/sec$ to $8.03*10^{-9}m^2/sec$. When the initial diffusion coefficient is $8.01*10^{-9}m^2/sec$ to $8.06*10^{-9}m^2/sec$, the movement of Li ion in the positive electrode material is effective, resulting in a high initial capacity and rate characteristic of the positive electrode material. On the other hand, if the diffusion coefficient is less than $7.30*10^{-9}m^2/sec$, the resistance in the positive electrode material increases, and as a result, the cycle characteristic is greatly reduced. When the diffusion coefficient exceeds $8.10*10^{-9}m^2/sec$, the structural instability increases and the cycle characteristic deteriorates.

Next, the crystal grain size of the metal oxide particle may range from 1,000 Å to 1,560 Å, more specifically, from 1,090 Å to 1,350 Å, or from 1,180 Å to 1,350 Å. When the grain size satisfies the range, the high temperature cycle-life is improved without reducing the initial capacity.

In addition, the full width at half maximum (FWHM) value of (110) planes of the metal oxide particle may range from 0.1900 to 0.2030, more specifically from 0.1901 to 0.2017, or from 0.1901 to 0.2014. When the full width at half maximum (FWHM) value for the (110) plane satisfies the range, it has a characteristic that the high temperature cycle-life is greatly improved.

When measuring the X-ray diffraction pattern of the positive electrode active material of the present embodiment, the ratio of the peak intensity of the (003) plane to the peak intensity of the (104) plane, I(003)/I(104), may range from 1.2350 to 1.2410, and more specifically, from 1.2351 to 1.2407.

In general, a peak intensity value means a peak height value or an integral area value obtained by integrating a peak area, and in the present embodiment, the peak intensity value means a peak area value.

If the peak intensity ratio I(003)/I(104) is included in the range, structural stabilization is promoted without a decrease in capacity, and the thermal safety of the positive electrode active material can be improved.

In addition, the peak intensity ratio I(003)/I(104) is a cation mixing index, and when the value of I(003)/I(104) decreases, the initial capacity and rate characteristic of the positive electrode active material may be deteriorated. However, in the present exemplary embodiment, since I(003)/I(104) satisfies the range, an excellent positive electrode active material can be realized with capacitance and rate characteristics.

On the other hand, the positive electrode active material of the present exemplary embodiment may be a bi-modal form in which large-diameter particles and small-diameter particles are mixed. The large-diameter particles may have an average particle diameter D50 ranging from 10 $\mu$m to 20 $\mu$m, and the small-diameter particles may have an average particle diameter D50 ranging from 3 $\mu$m to 7 $\mu$m. At this time, of course, the large-diameter particle and the small-diameter particle may also be in the form of a secondary particle in which at least one primary particle is assembled. In addition, the mixing ratio of large-size particles and small-size particles may be 50 to 80 wt% of large-size particles based on entire 100 wt%. Due to this bimodal particle distribution, energy density can be improved.

In another exemplary embodiment, it provides a lithium secondary battery comprising:
a positive electrode including a positive electrode active material according to one embodiment of the present invention, a negative electrode including a negative electrode active material, and an electrolyte positioned between the positive electrode and the negative electrode.

A description related to the positive electrode active material will be omitted because it is the same as that of an exemplary embodiment described above.

The positive electrode active material layer may include a binder and a conductive material.

The binder serves to attach the positive electrode active material particles well to each other and to attach the positive electrode active material to the current collector well.

The conductive material is used to impart conductivity to the electrode, and any electronic conductive material can be used without causing chemical change in the battery.

The negative electrode includes a current collector and a negative electrode active material layer formed on the current collector, and the negative electrode active material layer includes a negative electrode active material.

The negative electrode active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material. In a lithium ion secondary battery, any generally-used carbon-based negative electrode active material can be used, and typical examples thereof are crystalline carbon and amorphous carbon, or combination thereof. The alloy of the lithium metal is alloy of lithium and metal selected from the group consisting of Na, K, Rb, Cs, Fr, Be, Mg, Ca, Sr, Si, Sb, Pb, In, Zn, Ba, Ra, Ge, Al and Sn.

Materials capable of doping and undoping the lithium include Si, $SiO_x$ (0 < x < 2), Si-Y alloy (the Y is an element selected from the group consisting of an alkali metal, an alkaline earth metal, a group 13 element, a group 14 element, a transition metal, and a rare earth, and its combination thereof, but not Si), Sn, $SnO_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative electrode active material layer also includes a binder and may optionally further include a conductive material.

The binder serves to attach the negative electrode active material particles well to each other and to attach the negative electrode active material to the current collector well.

The conductive material is used to impart conductivity to the electrode, and any electronic conductive material can be used without causing chemical change in the battery.

As the current collector, one selected from the group consisting of copper foil, nickel foil, stainless steel foil, titanium foil, nickel foam, copper foam, a conductive metal-coated polymer substrate, and a combination thereof may be used.

The negative electrode and positive electrode are prepared by mixing active material, conductive material and binder in a solvent to prepare an active material composition, and applying this composition to a current collector. Since such an electrode manufacturing method is widely known in the field, detailed description will be omitted in this specification. As the solvent, N-methylpyrrolidone and the like can be used, but is not limited thereto.

The electrolyte contains a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, a mixed multilayer such as a polyethylene/polypropylene/polyethylene 3-layer separator, polypropylene/polyethylene/polypropylene 3-layer separator, can be used.

Lithium secondary batteries can be classified into lithium ion batteries, lithium ion polymer batteries and lithium polymer batteries according to the type of separator and electrolyte used, and can be classified into cylindrical, prismatic, coin-type, and pouch-type depending on the shape. It can be divided into bulk type and thin film type according to size. Since the structures and manufacturing methods of these batteries are well known in this field, detailed descriptions are omitted.

Hereinafter, an exemplary embodiment will be described in detail. However, this is presented as an example, and the present invention is not limited thereby, and the present invention is only defined by the range of claims to be described later.

**Preparation Example 1 - Preparation of NCM Precursor**

The positive electrode active material precursor was prepared by a general co-precipitation method.

$NiSO_4 \cdot 6H_2O$ was used as the nickel raw material, $CoSO_4 \cdot 7H_2O$ as the cobalt raw material, and $MnSO_4 \cdot H_2O$ as the manganese raw material. These raw materials were dissolved in distilled water to prepare a metal salt aqueous solution.

After preparing the co-precipitation reactor, $N_2$ was purged to prevent oxidation of metal ions during the co-precipitation reaction, and the temperature of the reactor was maintained at 50°C.

$NH_4(OH)$ was added to the co-precipitation reaction as a chelating agent, and NaOH was used for pH control. The precipitate obtained by the co-precipitation process was filtered, washed with distilled water, and then dried in a cake dryer at 180°C to prepare a positive electrode active material precursor.

The composition of the prepared precursor was $(Ni_{0.92}Co_{0.04}Mn_{0.04})(OH)_2$, the average particle diameter D50 of the large-size precursor was 14.3 $\mu$m, and the average particle diameter D50 of the small-size precursor was 4.5 $\mu$m.

**Exemplary embodiment 1 - 0.0035 mol Zr + 0.0025 mol Nb 0.001 mol + B doping**

A mixture obtained by uniformly mixing the precursor prepared in the Preparation Example 1, lithium raw material, aluminum raw material and doping raw material was sintered in an oxygen atmosphere in a tube furnace. The sintering condition was maintained at 480°C for 5 hours and then at 740-780°C for 15 hours, and the heating speed was 5°C/min.

LiOH $H_2O$ (Samjeon Chemical, battery grade) was used as the lithium raw material used, $Al(OH)_3$ (Aldrich, 3N) was used as the aluminum raw material, and $ZrO_2$ (Aldrich, 3N), $H_3BO_3$ (Aldrich, 3N), and $Nb_2O_5$ (Aldrich, 3N) were used as the doping raw materials.

At this time, the doping amount is expressed as M = $Ni_{0.90}Co_{0.04}Mn_{0.04}Al_{0.02}$ based on $LiNi_{0.90}Co_{0.04}Mn_{0.04}Al_{0.02}O_2$, which is not doped with the metal element, and the amount of doping material is adjusted so that M and the total amount of doping are 1 mol. That is, it has a $Li(M)_{1-x}(D)_xO_2$ (M=NCMA, D=doping material) structure. The entire composition of the large particle size and small particle size positive electrode active materials doped with the two elements prepared in this way was $Li(M)_{0.993}Zr_{0.0035}Nb_{0.0025}B_{0.001}O_2$.

The sintered large particle size and small particle size positive electrode active material is uniformly mixed at a weight ratio of 80:20 (large particle size:small particle size) to obtain the positive electrode active material of Example 1 in a bi-modal form.

**Comparative Example 1 - NCMA + Zr Doping**

A bimodal type positive electrode active material was prepared in the same manner as in Example 1, except that the amount of doping was adjusted using the precursor prepared in Preparation Example 1.

The entire composition of the large and small particle size positive electrode active materials prepared according to Comparative Example 1 was $Li(M)_{0.9965}Zr_{0.0035}O_2$.

**Exemplary embodiment 2 - 0.0035 mol Zr + 0.0025 mol Nb + 0.005 mol B doping**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to exemplary embodiment 2 was $Li(M)_{0.989}Zr_{0.0035}Nb_{0.0025}B_{0.005}O_2$.

**Exemplary embodiment 3 - 0.0035 mol Zr + 0.0025 mol Nb + 0.01 mol B doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 3 was $Li(M)_{0.984}Zr_{0.0035}Nb_{0.0025}B_{0.01}O_2$.

**Exemplary embodiment 4 - 0.0035 mol Zr + 0.0025 mol Nb + 0.015 mol B doping**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to exemplary embodiment 4 was $Li(M)_{0.979}Zr_{0.0035}Nb_{0.0025}B_{0.015}O_2$.

**Reference Example 1 - 0.0035 mol Zr + 0.0025 mol Nb + 0.02 mol B doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to Reference Example 1 was $Li(M)_{0.974}Zr_{0.0035}Nb_{0.0025}B_{0.02}O_2$.

**Exemplary embodiment 5 - doped with 0.002 mol Zr + 0.0025 mol Nb + 0.01 mol B**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to exemplary embodiment 5 was $Li(M)_{0.9855}Zr_{0.002}Nb_{0.0025}B_{0.01}O_2$.

**Exemplary embodiment 6 - 0.005 mol Zr + 0.0025 mol Nb + 0.01 mol B doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 6 was $Li(M)_{0.9825}Zr_{0.005}Nb_{0.0025}B_{0.01}O_2$.

**Reference Example 2 - 0.008 mol Zr + 0.0025 mol Nb + 0.01 mol B doping**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to Reference Example 2 was $Li(M)_{0.9795}Zr_{0.008}Nb_{0.0025}B_{0.01}O_2$.

**Example embodiment 7 - 0.0035 mol Zr + 0.0025 mol Nb + 0.01 mol B dopant + 0.005 mol Al**

A positive electrode active material in a bimodal form was manufactured by the same method as in the exemplary embodiment 1, except that the amount of the aluminum raw material and the doping raw material was adjusted using the precursor prepared in Preparation Example 1.

The entire composition of the positive electrode active material prepared according to exemplary embodiment 7 was $Li(Ni_{0.915}CO_{0.04}Mn_{0.04}Al_{0.005})_{0.984}Zr_{0.0035}Nb_{0.0025}B_{0.01}$.

**Example embodiment 8 - 0.0035 mol Zr + 0.0025 mol Nb + 0.01 mol B dopant + 0.01 mol Al**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to exemplary embodiment 8 was $Li(Ni_{0.91}Co_{0.04}Mn_{0.04}Al_{0.01})_{0.984}Zr_{0.0035}Nb_{0.0025}B_{0.01}$.

**Exemplary embodiment 9 - 0.0035 mol Zr + 0.0025 mol Nb + 0.01 mol B dopant + 0.015 mol Al**

A positive electrode active material in a bimodal form was manufactured by the same method as in the illustrated embodiment 1, except that the amount of the aluminum raw material and the amount of the doping material were adjusted using the precursor prepared in Preparation Example 1.

The entire composition of the positive electrode active material prepared according to exemplary embodiment 11 was $Li(Ni_{0.905}Co_{0.04}Mn_{0.04}Al_{0.015})_{0.984}Zr_{0.0035}Nb_{0.0025}B_{0.01}$.

**Example embodiment 12** - **0.0035 mol Zr** + **0.0025 mol Nb** + **0.01 mol B dopant** + **0.022 mol Al**

A positive electrode active material in a bimodal form was manufactured by the same method as in the illustrated embodiment 1, except that the amount of the aluminum raw material and the amount of the doping material were adjusted using the precursor prepared in Preparation Example 1.

The entire composition of the positive electrode active material prepared according to exemplary embodiment 12 was $Li(Ni_{0.898}CO_{0.04}Mn_{0.04}Al_{0.022})_{0.984}Zr_{0.0035}Nb_{0.0025}B_{0.01}$.

**Reference Example 3** - **0.0035 mol Zr** + **0.0025 mol Nb** + **0.01 mol B Dopant** + **0.025 mol Al**

A positive electrode active material in a bimodal form was manufactured by the same method as in the illustrated embodiment 1, except that the amount of the aluminum raw material and the amount of the doping material were adjusted using the precursor prepared in Preparation Example 1.

The entire composition of the positive electrode active material prepared according to Reference Example 3 was $Li(Ni_{0.895}CO_{0.04}Mn_{0.04}Al_{0.025})_{0.984}Zr_{0.0035}Nb_{0.0025}B_{0.01}$.

**Exemplary embodiment 11** - **0.0035 mol Zr** + **0.0005 mol Nb** + **0.01 mol B dopant**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 11 was $Li(M)_{0.986}Zr_{0.0035}Nb_{0.0005}B_{0.01}O_2$.

**Exemplary embodiment 12** - **0.0035 mol Zr** + **0.001 mol Nb** + **0.01 mol B dopant**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 12 was $Li(M)_{0.9855}Zr_{0.0035}Nb_{0.0001}B_{0.01}O_2$.

**Reference Example 4** - **0.0035 mol Zr** + **0.005 mol Nb** + **0.01 mol B dopant**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to Reference Example 4 was $Li(M)_{0.9815}Zr_{0.0035}Nb_{0.005}B_{0.01}O_2$.

The doping amount and entire composition of the positive electrode active material prepared according to the Comparative Example 1, Example Embodiments 1 to 12 and Reference Examples 1 to 4 are shown in the following table.

(Table 1)

| Category | Al | Dopant | | | Composition of positive electrode active material entire |
| --- | --- | --- | --- | --- | --- |
| | | Zr | Nb | B | |
| exemplary embodiment 1 | 0.02 | 0.0035 | 0.0025 | 0.001 | $Li(M)_{0.993}Zr_{0.0035}Nb_{0.0025}B_{0.001}O_2$ |
| Comparative Example 1 | 0.02 | 0.0035 | 0 | 0 | $Li(M)_{0.9965}Zr_{0.0035}O_2$ |
| exemplary embodiment 2 | 0.02 | 0.0035 | 0.0025 | 0.005 | $Li(M)_{0.989}Zr_{0.0035}Nb_{0.0025}B_{0.005}O_2$ |

(continued)

| Category | Al | Dopant | | | Composition of positive electrode active material entire |
| --- | --- | --- | --- | --- | --- |
| | | Zr | Nb | B | |
| exemplary embodiment 3 | 0.02 | 0.0035 | 0.0025 | 0.01 | $Li\,(M)_{0.984}Zr_{0.0035}Nb_{0.0025}B_{0.01}O_2$ |
| exemplary embodiment 4 | 0.02 | 0.0035 | 0.0025 | 0.015 | $Li\,(M)_{0.979}Zr_{0.0035}Nb_{0.0025}B_{0.015}O_2$ |
| Reference example 1 | 0.02 | 0.0035 | 0.0025 | 0.02 | $Li\,(M)_{0.974}Zr_{0.0035}Nb_{0.0025}B_{0.02}O_2$ |
| exemplary embodiment 5 | 0.02 | 0.002 | 0.0025 | 0.01 | $Li\,(M)_{0.9855}Zr_{0.002}Nb_{0.0025}B_{0.01}O_2$ |
| exemplary embodiment 6 | 0.02 | 0.005 | 0.0025 | 0.01 | $Li\,(M)_{0.9825}Zr_{0.005}Nb_{0.0025}B_{0.01}O_2$ |
| Reference example 2 | 0.02 | 0.008 | 0.0025 | 0.01 | $Li\,(M)_{0.9795}Zr_{0.008}Nb_{0.0025}B_{0.01}O_2$ |
| exemplary embodiment 7 | 0.005 | 0.0035 | 0.0025 | 0.01 | $Li\,(Ni_{0.915}Co_{0.04}Mn_{0.04}Al_{0.005})_{0.984}Zr_{0.0035}Nb_{0.0025}B_{0.01}$ |
| exemplary embodiment 8 | 0.01 | 0.0035 | 0.0025 | 0.01 | $Li\,(Ni_{0.91}Co_{0.04}Mn_{0.04}Al_{0.01})_{0.984}Zr_{0.0035}Nb_{0.0025}B_{0.01}$ |
| exemplary embodiment 9 | 0.015 | 0.0035 | 0.0025 | 0.01 | $Li\,(Ni_{0.905}Co_{0.04}Mn_{0.04}Al_{0.015})_{0.984}Zr_{0.0035}Nb_{0.0025}B_{0.01}$ |
| exemplary embodiment 10 | 0.022 | 0.0035 | 0.0025 | 0.01 | $Li\,(Ni_{0.898}Co_{0.04}Mn_{0.04}Al_{0.022})_{0.984}Zr_{0.0035}Nb_{0.0025}B_{0.01}$ |
| Reference example 3 | 0.025 | 0.0035 | 0.0025 | 0.01 | $Li\,(Ni_{0.895}Co_{0.04}Mn_{0.04}Al_{0.025})_{0.984}Zr_{0.0035}Nb_{0.0025}B_{0.01}$ |
| exemplary embodiment 11 | 0.02 | 0.0035 | 0.0005 | 0.01 | $Li\,(M)_{0.986}Zr_{0.0035}Nb_{0.0005}B_{0.01}O_2$ |
| exemplary embodiment 12 | 0.02 | 0.0035 | 0.001 | 0.01 | $Li\,(M)_{0.9855}Zr_{0.0035}Nb_{0.0001}B_{0.01}O_2$ |
| Reference example 4 | 0.02 | 0.0035 | 0.005 | 0.01 | $Li\,(M)_{0.9815}Zr_{0.0035}Nb_{0.005}B_{0.01}O_2$ |

**Comparative Example 2 - 0.78 mol Ni + 0.0035 mol Zr + 0.0025 mol Nb Dopant + 0.02 mol Al**

Large-size and small-size precursors having a composition of $(Ni_{0.80}Co_{0.10}Mn_{0.10})(OH)_2$ were prepared by the same method as in Preparation Example 1.

Next, a positive electrode active material in a bimodal form was prepared by the same method as in the exemplary embodiment 1, except that the amounts of the aluminum raw material and the doping raw material were adjusted using the precursor.

The entire composition of the positive electrode active material prepared according to Comparative Example 2 was $Li(Ni_{0.78}Co_{0.10}Mn_{0.10}Al_{0.02})_{0.994}Zr_{0.0035}Nb_{0.0025}$.

**Comparative Example 3 - 0.81 mol Ni + 0.0035 mol Zr + 0.0025 mol Nb Dopant + 0.02 mol Al**

Large particle size and small particle size precursors having a composition of $(Ni_{0.83}Co_{0.12}Mn_{0.05})(OH)_2$ were prepared by the same method as in Preparation Example 1.
Next, a positive electrode active material in a bimodal form was prepared by the same method as in the exemplary embodiment 1, except that the amount of the doping material was adjusted using the precursor.
The entire composition of the positive electrode active material prepared according to Comparative Example 3 was $Li(Ni_{0.81}Co_{0.12}Mn_{0.05}Al_{0.02})_{0.994}Zr_{0.0035}Nb_{0.0025}$.

**Comparative Example 4 - 0.83 mol Ni + 0.0035 mol Zr + 0.0025 mol Nb Dopant + 0.02 mol Al**

Large-size and small-size precursors having a composition of $(Ni_{0.85}Co_{0.07}Mn_{0.08})(OH)_2$ were prepared by the same method as in Preparation Example 1.
Next, a positive electrode active material in a bimodal form was prepared by the same method as in the exemplary embodiment 1, except that the amount of the doping material was adjusted using the precursor.
The entire composition of the positive electrode active material prepared according to Comparative Example 4 was $Li(Ni_{0.83}CO_{0.07}Mn_{0.08}Al_{0.02})_{0.994}Zr_{0.0035}Nb_{0.0025}$.

**Comparative Example 5 - 0.84 mol Ni + 0.0035 mol Zr + 0.0025 mol Nb Dopant + 0.02 mol Al**

Large particle size and small particle size precursors having a composition of $(Ni_{0.86}Co_{0.07}Mn_{0.07})(OH)_2$ were prepared by the same method as in Preparation Example 1.
Next, a positive electrode active material in a bimodal form was prepared by the same method as in the exemplary embodiment 1, except that the amount of the doping material was adjusted using the precursor.
The entire composition of the positive electrode active material prepared according to Comparative Example 5 was $Li(Ni_{0.84}Co_{0.07}Mn_{0.07}Al_{0.02})_{0.994}Zr_{0.0035}Nb_{0.0025}$.

**Comparative Example 6 - 0.86 mol Ni + 0.0035 mol Zr + 0.0025 mol Nb Dopant + 0.02 mol Al**

Large particle size and small particle size precursors having a composition of $(Ni_{0.88}Co_{0.05}Mn_{0.07})(OH)_2$ were prepared by the same method as in Preparation Example 1.
Next, a positive electrode active material in a bimodal form was prepared by the same method as in the exemplary embodiment 1, except that the amount of the doping material was adjusted using the precursor.
The entire composition of the positive electrode active material prepared according to Comparative Example 6 was $Li(Ni_{0.86}CO_{0.05}Mn_{0.07}Al_{0.02})_{0.994}Zr_{0.0035}Nb_{0.0025}$.

**Reference Example 5 - In exemplary embodiment 1, only Ni was changed to 0.78 mol**

Large-size and small-size precursors having a composition of $(Ni_{0.80}Co_{0.10}Mn_{0.10})(OH)_2$ were prepared by the same method as in Preparation Example 1.
Next, a positive electrode active material in a bimodal form was prepared by the same method as in the exemplary embodiment 1 except for using the precursor.
The entire composition of the positive electrode active material prepared according to Reference Example 5 was $LI(Ni_{0.78}Co_{0.01}Mn_{0.01}Al_{0.02})_{0.984}Zr_{0.0035}Nb_{0.0025}B_{0.01}$.

**Reference Example 6 - In exemplary embodiment 1, only Ni was changed to 0.81 mol**

Large particle size and small particle size precursors having a composition of $(Ni_{0.83}Co_{0.12}Mn_{0.05})(OH)_2$ were prepared by the same method as in Preparation Example 1.
Next, a positive electrode active material in a bimodal form was prepared by the same method as in the exemplary embodiment 1 except for using the precursor.
The entire composition of the positive electrode active material prepared according to Reference Example 6 was $Li(Ni_{0.81}Co_{0.12}Mn_{0.05}Al_{0.02})_{0.984}Zr_{0.0035}Nb_{0.0025}B_{0.01}$.

**Example embodiment 13** - **In exemplary embodiment 1, only Ni is changed to 0.83 mol**

Large-size and small-size precursors having a composition of $(Ni_{0.85}Co_{0.07}Mn_{0.08})(OH)_2$ were prepared by the same method as in Preparation Example 1.

Next, a positive electrode active material in a bimodal form was prepared by the same method as in the exemplary embodiment 1 except for using the precursor.

The entire composition of the positive electrode active material prepared according to exemplary embodiment 13 was $Li(Ni_{0.83}Co_{0.07}Mn_{0.08}Al_{0.02})_{0.984}Zr_{0.0035}Nb_{0.0025}B_{0.01}$.

**Example embodiment 14 - In exemplary embodiment 1, only Ni is changed to 0.84 mol**

Large particle size and small particle size precursors having a composition of $(Ni_{0.86}Co_{0.07}Mn_{0.07})(OH)_2$ were prepared by the same method as in Preparation Example 1.

Next, a bimodal type positive electrode active material was prepared by the same method as in the exemplary embodiment 1 except for using the precursor.

The entire composition of the positive electrode active material prepared according to exemplary embodiment 14 was $Li(Ni_{0.84}Co_{0.07}Mn_{0.07}Al_{0.02})_{0.984}Zr_{0.0035}Nb_{0.0025}B_{0.01}$.

**Example embodiment 15 - In exemplary embodiment 1, only Ni is changed to 0.86 mol**

Large particle size and small particle size precursors having a composition of $(Ni_{0.88}Co_{0.05}Mn_{0.07})(OH)_2$ were prepared by the same method as in Preparation Example 1.

Next, a positive electrode active material in a bimodal form was prepared by the same method as in the exemplary embodiment 1 except for using the precursor.

The entire composition of the positive electrode active material prepared according to exemplary embodiment 15 was $Li(Ni_{0.86}Co_{0.05}Mn_{0.07}Al_{0.02})_{0.984}Zr_{0.0035}Nb_{0.0025}B_{0.01}$.

The doping amount and entire composition of the Comparative Example 2 to 6 and Reference Examples 5 to 6 and exemplary embodiments 13 to 15 are shown in the following table.

(Table 2)

| Category | Dopant | | | Composition of positive electrode active material entire |
|---|---|---|---|---|
| | Zr | Nb | B | |
| Comparative Example 2 | 0.0035 | 0.0025 | 0 | Li $(Ni_{0.78}Co_{0.10}Mn_{0.10}Al_{0.02})_{0.994}Zr_{0.0035}Nb_{0.0025}$ |
| Comparative Example 3 | 0.0035 | 0.0025 | 0 | Li $(Ni_{0.81}Co_{0.12}Mn_{0.05}Al_{0.02})_{0.994}Zr_{0.0035}Nb_{0.0025}$ |
| Comparative Example 4 | 0.0035 | 0.0025 | 0 | Li $(Ni_{0.83}Co_{0.07}Mn_{0.08}Al_{0.02})_{0.994}Zr_{0.0035}Nb_{0.0025}$ |
| Comparative Example 5 | 0.0035 | 0.0025 | 0 | Li $(Ni_{0.84}Co_{0.07}Mn_{0.07}Al_{0.02})_{0.994}Zr_{0.0035}Nb_{0.0025}$ |
| Comparative Example 6 | 0.0035 | 0.0025 | 0 | Li $(Ni_{0.85}Co_{0.05}Mn_{0.07}Al_{0.02})_{0.994}Zr_{0.0035}Nb_{0.0025}$ |
| Reference Example 5 | 0.0035 | 0.0025 | 0.01 | Li $(Ni_{0.78}Co_{0.01}Mn_{0.01}Al_{0.02})_{0.984}Zr_{0.0035}Nb_{0.0025}B_{0.01}$ |
| Reference Example 6 | 0.0035 | 0.0025 | 0.01 | Li $(Ni_{0.81}Co_{0.12}Mn_{0.05}Al_{0.02})_{0.984}Zr_{0.0035}Nb_{0.0025}B_{0.01}$ |
| exemplary embodiment 13 | 0.0035 | 0.0025 | 0.01 | Li $(Ni_{0.83}Co_{0.07}Mn_{0.08}Al_{0.02})_{0.984}Zr_{0.0035}Nb_{0.0025}B_{0.01}$ |
| exemplary embodiment 14 | 0.0035 | 0.0025 | 0.01 | Li $(Ni_{0.84}Co_{0.07}Mn_{0.07}Al_{0.02})_{0.984}Zr_{0.0035}Nb_{0.0025}B_{0.01}$ |
| exemplary embodiment 15 | 0.0035 | 0.0025 | 0.01 | Li $(Ni_{0.86}Co_{0.05}Mn_{0.07}Al_{0.02})_{0.984}Zr_{0.0035}Nb_{0.0025}B_{0.01}$ |

**Experimental Example 1** - **XRD analysis result**

The lattice constant of the positive electrode active material prepared according to Exemplary Embodiment 1 to 4, Reference Example 1 and Comparative Example 1 was obtained by X-ray diffraction measurement using $CuK\alpha$ rays. The measured a-axis length, b-axis length and c-axis length are shown in Table 3 below.

In addition, the unit cell volume and crystalline size of the active material were measured and shown in Table 3 below.

Next, for crystallographic examination by doping, Rietveld analysis was performed using commercially available software, the High Score Plus 4.0 program, and the results are shown in Table 3. The XRD measurement range was performed at 10°-130°, and fitting was performed through Rietveld refinement. GOF (Goodness of Fitness) values were matched within 2.0.

XRD equipment (Panalytical's X'pert3 powder diffraction) was used to measure the intensity (peak area) of (003) and (104) planes and the intensity of (110) planes at a scan speed (°/s) of 0.328. From this result, the Full Width at Half Maximum (FWHM) of (110), and I(003)/I(104) was obtained and shown in Table 3.

In addition, in all of the measured samples, the (003) plane was well developed as the main peak around 18.7°. It was confirmed that splitting of (006)/(102) peak between 37.5° and 38.5° and (108)/(110) peak between 63.5° and 35.5° appeared. Accordingly, it was found to have good crystalline ordering of the hexagonal layer, and it was found to exhibit a typical $\alpha$-NaFeO$_2$ (space group R-3m) structure.

(Table 3)

| | a | b | c | unit cell volume | I(003)/I(104) (strength standard) | FWHM of 110 plane | Grain size (Å) |
|---|---|---|---|---|---|---|---|
| Comparative Example1 | 2.8721 | 2.8721 | 14.2046 | 101.4829 | 1.2408 | 0.1886 | 1592 |
| exemplary embodiment1 | 2.8737 | 2.8737 | 14.2046 | 101.4970 | 1.2407 | 0.1901 | 1350 |
| exemplary embodiment2 | 2.8736 | 2.8736 | 14.2047 | 101.5120 | 1.2391 | 0.1916 | 1270 |
| exemplary embodiments | 2.8734 | 2.8734 | 14.2049 | 101.5210 | 1.2383 | 0.2014 | 1180 |
| exemplary embodiment4 | 2.8732 | 2.8732 | 14.2051 | 101.5360 | 1.2351 | 0.2017 | 1090 |
| Reference example 1 | 2.8722 | 2.8722 | 14.2046 | 101.4810 | 1.2408 | 0.1886 | 1576 |

Referring to Table 3, it can be seen that the factor values of the XRD analysis result crystal structure are changed according to the doping element and doping amount.

Specifically, in the case of Reference Example 1, it can be seen that as the doping amount of B is excessively doped to 0.02 mol, the values of a and b, which are crystal structure constants, decrease rapidly. A rapid decrease in the value of a, a crystal constant, leads to shrinkage of the unit cell volume, which is considered to be due to a change in a part of the crystal structure due to excessive B doping.

That is, it can be confirmed that the doping amount of B may range from 0.005 mole to 0.02 mole, preferably from 0.001 mole to 0.015 mole.

**Experimental Example 2 - Electrochemical evaluation**

**(1) coin-type half-cell fabrication**

After manufacturing a CR2032 coin cell using the positive electrode active material manufactured as described above, an electrochemical evaluation was conducted.

Positive electrode active material, Denka black conductive material, and polyvinylidene fluoride binder (trade name: KF1100) were mixed at a weight ratio of 92.5:3.5:4, and this mixture was added to N-Methyl-2-pyrrolidone solvent to have a solid content of about 30 wt% to prepare a positive electrode active material slurry.

The slurry was coated on aluminum foil (Al foil, thickness: 15 $\mu$m), which is a positive electrode current collector, using a doctor blade (Doctor blade), dried, and rolled to prepare a positive electrode. The loading amount of the positive electrode was 14.6 mg/cm$^2$, and the rolling density was 3.1 g/cm$^3$.

A 2032 coin-type half cell was prepared by a conventional method using the positive electrode, lithium metal negative electrode (300$\mu$m, MTI), electrolyte solution and polypropylene separator. The electrolyte solution is the product obtained by dissolving 1M LiPF$_6$ in a mixed solvent of ethylene carbonate (EC), dimethyl carbonate (DMC) and ethylmethyl carbonate (EMC) (mixing ratio EC:DMC:EMC=3:4:3 volume ratio), and 3 wt% of vinylene carbonate was added to 100 wt% of the entire solution.

**(2) Evaluation of charge and discharge characteristics**

After aging the prepared coin-type half cell at room temperature 25 °C for 10 hours, charging and discharging were performed.

The capacity evaluation was based on 205mAh/g, and the charge and discharge conditions were constant current (CC) / constant voltage (CV) 2.5V to 4.25V, and 1/20C cut-off.

For initial capacity, discharge capacity was measured after 0.1C charge/0.1C discharge, and initial efficiency was calculated after 0.2C charge/0.2C discharge, and the results are shown in Table 4 below.

**(3) Cycle-life characteristic measurement**

The room temperature cycle-life characteristic was measured at room temperature 25°C, and the high temperature cycle-life characteristic was measured 30 times in 0.3C charge/0.3C discharge condition at high temperature 45°C.

**(4) Resistance characteristic measurement**

The room temperature initial resistance (DC internal resistance: Direct current internal resistance (DC-IR)) is the constant current-constant voltage 2.5V to 4.25V at 25°C, 1/20C cut-off condition, 0.2C charging and 0.2 discharge discharge was performed once, and the voltage value was measured 60 seconds after applying the discharge current at 4.25V charge 100%, and then it was calculated.

The resistance increase rate is measured in the same way as the initial resistance measurement method after 30 cycle compared to the resistance initially measured at room temperature 25°C (room temperature initial resistance), and the increase rate is converted into percentage (%).

The average leakage current was measured by a method in which current generation was measured for 120 hours and then the average value was obtained, when the half cell was maintained at 4.7V at a high temperature of 45 °C.

**(5) Thermal stability evaluation**

In the differential scanning calorimetry (DSC) analysis, after charging the half cell from the initial 0.1C charging condition to 4.25V, the half cell is disassembled to obtain only the positive electrode separately, and the positive electrode is washed 5 times with dimethyl carbonate. After impregnation of the positive electrode washed in the crucible for DSC with electrolyte solution, while raising the temperature to 265 °C, the DSC peak temperature and calorific value result obtained by measuring the caloric change using Mettler Toledo's DSC1 star system as a DSC device.

**Experimental Example 2-1. Effect according to B content**

Table 4 shows the electrochemical characteristic evaluation results performed by the method of Experimental Example 2 for the positive electrode active material manufactured according to Example Embodiment 1 to 7 and Comparative Example 1.

(Table 4)

|  | discharge capacity (mAh/g) | Initial efficiency (%) | room temperature cycle-life (%) | High temperature cycle-life (%) | room temperature initial resistance ($\Omega$) | Resistance increase rate (%) | average leakage current (mA) | DSC peak temperature (°C) |
|---|---|---|---|---|---|---|---|---|
| Comparative Example1 | 213.7 | 90.9 | 92.4 | 92.1 | 29.3 | 79.8 | 0.37 | 228 |
| exemplary embodiment1 | 220.3 | 94.7 | 95.2 | 95.1 | 23.1 | 40.7 | 0.20 | 228 |
| exemplary embodiment2 | 220.1 | 94.5 | 97.1 | 97.0 | 25.3 | 37.2 | 0.17 | 230 |
| exemplary embodiments | 219.6 | 94.4 | 97.6 | 97.3 | 25.4 | 36.4 | 0.17 | 231 |
| exemplary embodiment4 | 219.8 | 94.3 | 97.4 | 97.2 | 25.7 | 36.2 | 0.16 | 231 |
| Reference example 1 | 215.3 | 91.2 | 98.1 | 97.8 | 31.2 | 79.8 | 0.12 | 232 |

Exemplary embodiments 1 to 4 are the result of measuring the electrochemical characteristic according to the doping amount when the Al raw material is mixed with a precursor having a Ni content of 90 mol% or more; and Zr, Nb and B dopant together.

Referring to Table 4, the positive electrode active material of Examples 1 to 4 in which NCMA is doped with Zr, Nb and B is compared with the positive electrode active material of Comparative Example 1 in which NCMA is doped with Zr, it can be seen that discharge capacity and initial the capacity greatly increases.

In addition, when Nb and B are doped with Zr as in Example Embodiments 1 to 4, it can be seen that the room temperature cycle-life and high temperature cycle-life are significantly increased while the discharge capacity is maintained similarly. In addition, it can be seen that the resistance increase rate, average leakage current value and DSC peak temperature are all improved. This is considered to be because B remains on the surface of the positive electrode active material and simultaneously has a lithium ion conductor coating effect.

It can be seen that this significantly improves the rapid discharge capacity reduction and initial efficiency reduction, which are problems in the conventional positive electrode active material doped with Al and Zr by adding 0.01 mol or more of Al.

However, in the case of excessive doping of B as in Reference Example 1, it can be seen that the discharge capacity and initial efficiency are significantly deteriorated. Considering this, as described above, it can be confirmed that the doping amount of B is range from 0.001 mole to 0.02 mole, and preferably from 0.005 mole to 0.015 mole with respect to 1 mole of nickel, cobalt, manganese, aluminum and the total doping element,

**Experimental Example 2-2. Effects of Zr content**

Table 5 shows the electrochemical characteristic evaluation results performed by the method of Experimental Example 2 for the positive electrode active material prepared according to Exemplary Embodiment 5 to 6 and Reference Example 2. For comparison, the result of Example 3 is also displayed.

(Table 5)

| | discharge capacity (mAh/g) | Initial efficiency (%) | room temperature cycle-life (%) | High temperature cycle-life (%) | room temperature initial resistance ($\Omega$) | Resistance increase rate (%) | average leakage current (mA) | DSC peak temperature (°C) |
|---|---|---|---|---|---|---|---|---|
| exemplary embodiments | 219.6 | 94.3 | 93.9 | 94.4 | 29.8 | 61.4 | 0.31 | 228.0 |
| exemplary embodiments | 219.6 | 94.4 | 97.6 | 97.3 | 25.4 | 36.4 | 0.17 | 231.0 |
| exemplary embodiments | 216.5 | 92.9 | 97.6 | 97.2 | 33.7 | 38.5 | 0.18 | 232.0 |
| Reference example 2 | 206.9 | 86.9 | 98.5 | 98.2 | 39.1 | 58.3 | 0.20 | 232.0 |

In exemplary embodiment 5 to 6 and Reference Example 2, only the doping amount of Zr was changed while the doping amount of Nb was fixed at 0.0025 mol and the amount of B introduced was fixed at 0.01 mol in NCMA in which 0.2 mol of aluminum was introduced.

Referring to Table 5, it can be understood that as the doping amount of Zr increases from 0.002 mol to 0.008 mol, some characteristics are improved and some characteristics are deteriorated.

Specifically, referring to the results of exemplary embodiments 3, 5, and 6, it can be seen that the high temperature cycle-life and room temperature cycle-life are improved as the doping amount of Zr increases. However, as in Reference Example 1, when the Zr doping amount is increased to 0.008 mol, it can be seen that the discharge capacity and initial efficiency are greatly deteriorated.

Therefore, in the present exemplary embodiment, the appropriate doping amount of Zr can be in the range of 0.001 mol to 0.007 mol, specifically 0.002 mol to 0.005 mol or 0.0035 mol to 0.005 mol, based on 1 mol of the total of nickel, cobalt, manganese and doping elements.

**Experimental Example 2-3. Effect according to Al content**

Table 6 shows the electrochemical characteristic evaluation results performed by the method of Experimental Example 2 for the positive electrode active material manufactured according to Exemplary Embodiment 7 to 10 and Reference Example 3. For comparison, the result of Example 3 is also displayed.

(Table 6)

| | discharge capacity (mAh/g) | Initial efficiency (%) | room temperature cycle-life (%) | High temperature cycle-life (%) | room temperature initial resistance ($\Omega$) | Resistance increase rate (%) | average leakage current (mA) | DSC peak temperature (℃) |
|---|---|---|---|---|---|---|---|---|
| exemplary embodiment7 | 222.3 | 94.8 | 91.0 | 90.9 | 37.0 | 73.9 | 0.45 | 223.0 |
| exemplary embodiments | 221.3 | 94.6 | 94.5 | 94.9 | 27.2 | 49.5 | 0.27 | 228.0 |
| exemplary embodiment9 | 219.3 | 94.4 | 98.6 | 95.7 | 28.5 | 45.1 | 0.23 | 230.0 |
| exemplary embodiments | 219.6 | 94.4 | 97.6 | 97.3 | 25.4 | 36.4 | 0.18 | 231.0 |
| exemplary embodiment1 0 | 217.6 | 93.5 | 99.2 | 98.8 | 23.9 | 33.1 | 0.17 | 234.4 |
| Reference example 3 | 209.6 | 86.1 | 99.0 | 99.7 | 22.9 | 32.1 | 0.15 | 236.1 |

In Exemplary Embodiment 7 to 10 and Reference Example 3, only the amount of the Al raw material was changed while the doping amounts were fixed at 0.0035 mol of Zr, 0.0025 mol of Nb, and 0.01 mol of B.

Referring to Table 6, it can be seen that as the amount of Al raw material increases, the room temperature cycle-life and high temperature cycle-life greatly increase, and the room temperature initial resistance, resistance increase rate, and leakage current decrease. Particularly, the DSC peak temperature increased significantly.

However, in the case of Reference Example 3 in which the amount of Al raw material to be mixed is 0.025 mol, it can be seen that the discharge capacity is greatly reduced, and as a result, the initial efficiency is also significantly deteriorated.

Therefore, in the present exemplary embodiment, the amount of the aluminum raw material may range from 0.008 mole to 0.029 mole, more specifically, from 0.005 mole to 0.025 mole, based on 1 mole of the total of nickel, cobalt, manganese, aluminum and doping elements.

**Experimental Example 2-4. Effects of Nb content**

Table 7 shows the electrochemical characteristic evaluation results performed by the method of Experimental Example 2 for the positive electrode active material prepared according to Example Embodiment 11 to 12 and Reference Example 4. For comparison, the result of Example 3 is also displayed.

(Table 7)

|  | discharge capacity (mAh/g) | Initial efficiency (%) | room temperature cycle-life (%) | High temperature cycle-life (%) | room temperature initial resistance (Ω) | Resistance increase rate (%) | average leakage current (mA) | DSC peak temperature (°C) |
|---|---|---|---|---|---|---|---|---|
| exemplary embodiment11 | 218.1 | 93.7 | 96.5 | 96.4 | 27.8 | 42.5 | 0.23 | 229.0 |
| exemplary embodiment12 | 218.8 | 94.1 | 97.0 | 96.1 | 27.3 | 40.3 | 0.20 | 231.0 |
| exemplary | 219.6 | 94.4 | 97.6 | 97.3 | 25.4 | 36.4 | 0.17 | 231.0 |
| embodiments |  |  |  |  |  |  |  |  |
| Reference example 4 | 214.7 | 91.7 | 96.7 | 96.6 | 30.0 | 65.5 | 0.17 | 231.0 |

EP 4 266 422 A1

In exemplary embodiment 11 to 12 and reference example 4, only the doping amount of Nb was changed while fixing 0.0035 mol of Zr and 0.01 mol of B in NCMA into which 0.02 mol of Al was introduced.

Referring to Table 7, it can be seen that the discharge capacity and initial efficiency significantly increase as the Nb content increases.

However, in the case of Reference Example 4 in which Nb was excessively doped with 0.005 mol, it can be seen that the discharge capacity is greatly reduced and the initial efficiency is rapidly deteriorated.

Therefore, in the present exemplary embodiment, the appropriate doping amount of Nb is in the range of 0.00005 mol to 0.03 mol, specifically 0.0001 mol to 0.01 mol or 0.0005 mol to 0.0025 mol, based on 1 mol of the total of nickel, cobalt, manganese, aluminum and doping elements.

## Experimental Example 2-5. Effects of Ni content

Table 8 shows the electrochemical characteristic evaluation results performed by the method of Experimental Example 2 for the positive electrode active material prepared according to Comparative Example 2 to 6, Reference Example 5 to 6 and Example Embodiment 13 to 15. For comparison, the results of Comparative Example 1 and Example Embodiment 3 are also displayed.

(Table 8)

| | discharge capacity (mAh/g) | Initial efficiency (%) | room temperaturec ycle-life (%) | High temperature cycle-life (%) | room temperatur e initial resistance ($\Omega$) | Resistance increase rate (%) | average leakage current (mA) | DSC peak temperatur e ($^{\circ}C$) |
|---|---|---|---|---|---|---|---|---|
| Comparative Example2 (Ni78°,6) | 198.43 | 86.80 | 96.9 | 95.3 | 16.2 | 42.8 | 0.21 | 233 |
| Reference Example 5 | 198.32 | 86.75 | 97.3 | 97.1 | 17.1 | 35.7 | 0.17 | 236 |
| Comparative Examples (Ni81%) | 203.84 | 87.60 | 94.5 | 94.3 | 19.9 | 48.7 | 0.24 | 224 |
| Reference Example 6 | 202.74 | 88.69 | 97.1 | 96.0 | 21.4 | 41.3 | 0.19 | 228 |
| Comparative Example4 (Ni83°,6) | 210.5 | 89.50 | 95.5 | 95.4 | 21.9 | 44.9 | 0.21 | 222 |
| exemplary embodiment1 3 | 209.8 | 91.77 | 98.3 | 98.1 | 23.2 | 37.8 | 0.16 | 227 |
| Comparative Examples (Ni84°,6) | 211.7 | 91.80 | 95.3 | 95.1 | 22.2 | 47.9 | 0.23 | 223 |
| exemplary embodiment1 4 | 210.7 | 92.17 | 98.0 | 97.8 | 23.7 | 40.1 | 0.17 | 229 |
| Comparative Examples (Ni86°,6) | 218.8 | 92.60 | 95.5 | 95.3 | 24.3 | 45.3 | 0.21 | 218 |
| exemplary embodiment1 5 | 217.5 | 95.14 | 97.2 | 97.1 | 25.1 | 41.0 | 0.13 | 224 |
| Comparative Example1 (Ni90%) | 213.7 | 90.9 | 92.4 | 92.1 | 29.3 | 79.8 | 0.37 | 228 |
| exemplary embodiments | 219.6 | 94.40 | 97.6 | 97.3 | 25.4 | 36.4 | 0.17 | 230 |

Comparative Examples 2 to 6 are positive electrode active materials in which NCMA is doped with Zr and Nb, and Reference Examples 5 to 6 and Examples 13 to 15 are positive electrode active materials prepared by mixing NCMA with Zr, Nb and B doping materials.

Referring to Table 8, in the case of exemplary embodiments 13 to 15 in which B was used as a doping material, room temperature cycle-life, high temperature cycle-life, resistance increase rate, and average leakage current value were all improved.

In addition, since the DSC peak temperature was all increased, it can be seen that the thermal stability of the positive electrode active material can be significantly improved when B is included as a doping element.

As a resultantly the present exemplary embodiment, it can be confirmed that the discharge capacity increase and initial efficiency increase effect are very excellent and other properties are improved as a whole when the ternary material including Zr, Nb and B is doped in the NCMA product with Ni content of 83% or more.

**Experimental Example 3 - Diffusion coefficient and impedance analysis**

Diffusion coefficient and impedance analysis were performed on the positive electrode active material prepared according to Exemplary Embodiment 1 to 4, Reference Example 1 and Comparative Example 1, and are shown in Table 7 below.

The diffusion coefficient was measured by the GITT method, and after 30 minutes of charging, 50 minutes of maintenance was performed, and the data obtained at this time were analyzed using Equation 3 below.

[Equation 3]

$$ D = \frac{4}{\pi} \left( \frac{V_M I_0}{A F Z_{Li}} \right)^2 \left[ \left( \frac{dE_s}{dx} \right) / \left( \frac{dE_t}{d\sqrt{t}} \right) \right]^2 $$

In Equation 2,

$V_M$: molar volume of positive electrode active material
A: electrode area when measuring diffusion coefficient
F: Faraday constant
$Z_{Li}$: +1
$I_0$: 0.1C
x: fraction in which lithium is present in the electrode
$dE_s$: voltage change obtained in the maintaining section,
dEt: Voltage change obtained in the charging section
t: time (sec)

Specifically, the molar volume of the positive electrode active material was calculated using the unit volume analyzed through XRD measurement results. A is the electrode area when measuring the diffusion coefficient. In the case of the coin cell used in this diffusion coefficient measurement, the area has a size of 1.538 cm$^2$. $I_0$ means 0.1C current value. X can be calculated assuming that the entire charge and discharge section is 100%. For example, x corresponding to the initial 30-minute charging section can be expressed as 0.05, x corresponding to the second 30-minute charging section can be expressed as 0.1, and x corresponding to the middle section can be expressed as 0.5.

Impedance analysis was analyzed using the impedance graph obtained at 3.7V, and is shown in Table 9 like the diffusion coefficient. When Nyquist plot was performed by separating the obtained impedance value into the real axis and the imaginary axis, the figure obtained was divided into two semicircles and fitted to obtain $R_{sei}$ and $R_{ct}$. At this time, the resistance value obtained by the semicircle generated in the high frequency region was named $R_{sei}$, and the resistance value obtained by the semicircle generated in the low frequency region was named $R_{ct}$ to obtain the resistance value. Looking at the characteristics of the resistance shown in Table 8, when the doping amount of B is 0.005 mol to 0.015 mol, the initial $R_{sei}$ and $R_{ct}$ values are slightly increased compared to Comparative Example 1, and it can be seen that the initial resistance is slightly increased. After the cycle, it can be confirmed that the increase in $R_{ct}$ value and $R_{sei}$ value decreased compared to Comparative Example 1. That is, when B is doped into the positive electrode material, the surface characteristic is improved, and the side reaction between the electrolyte and the positive electrode is suppressed. It can be confirmed that the increase in resistance is not large after the high temperature cycle. The suppression of the particularly $R_{sei}$ resistance increase means reactions with electrolytes are suppressed, and the suppression of $R_{ct}$ resistance increase means that the electrode activity deterioration phenomenon of the positive electrode material is suppressed. It can be understood that the initial output improvement and degradation phenomenon can be suppressed when appropriately doped with B.

(Table 9)

| | initial diffusion coefficient (*10⁻⁹m²/sec) | initial Rsei (Ω) | initial Rct (Ω) | diffusion coefficient after cycle (*10⁹m²/sec) | Rsei after cycle (Ω) | Ret after cycle (Ω) | diffusion coefficient increase rate (%) | Rsei increase rate (%) | Rct increase rate (%) |
|---|---|---|---|---|---|---|---|---|---|
| Comparative Example1 | 7.24 | 3.22 | 5.62 | 5.96 | 11.90 | 8.88 | 21.47 | 269.5 | 58.0 |
| exemplary embodiment 1 | 806 | 2.23 | 4.79 | 707 | 9.17 | 5.12 | 12.3 | 75.7 | 6.4 |
| exemplary embodiment 2 | 804 | 2.31 | 4.84 | 706 | 8.76 | 5.03 | 12.2 | 73.6 | 3.8 |
| exemplary embodiment 3 | 803 | 2.39 | 4.91 | 7.14 | 8.71 | 507 | 11.1 | 72.6 | 3.2 |
| exemplary embodiment 4 | 8.01 | 2.51 | 4.93 | 7.21 | 8.64 | 5.11 | 100 | 70.9 | 3.5 |
| Reference example 1 | 6.24 | 3.48 | 6.17 | 6.18 | 9.64 | 7.03 | 1.0 | 63.9 | 12.2 |

Referring to Table 9, in the example embodiment using Zr, Nb and B as doping elements, the initial resistance values of $R_{sei}$ and $R_{ct}$ increased, but the resistance increase rate after cycle was significantly lowered. Particularly, it was found that the resistance increase rate of the $R_{ct}$ value, which is the core resistance of electron transfer, was very greatly reduced. Based on this, it can be seen that it has a characteristic that suppresses the electrode deterioration phenomenon when Zr, Nb and B are simultaneously doped. That is, it can be confirmed that the rate of increase in $R_{sei}$ and $R_{ct}$ resistances is effectively suppressed by simultaneous doping of these elements.

The present invention is not limited to the exemplary embodiment, but can be manufactured in a variety of different forms, and a person of an ordinary skill in the technical field to which the present invention belongs does not change the technical idea or essential characteristics of the present invention. It will be appreciated that it may be embodied in other specific forms. Therefore, the exemplary embodiment described above should be understood as illustrative in all respects and not limiting.


**Claims**

1.   A positive electrode active material for a lithium secondary battery, comprising:

     a metal oxide particle including nickel, cobalt, manganese and aluminum; and
     three doping elements doped into the metal oxide particle.

2.   The positive electrode active material of claim 1, wherein:
     the three doping elements are Nb, B and Zr.

3.   The positive electrode active material of claim 2, wherein:
     the doping amount of the Nb ranges from 0.00001 mole to 0.03 mole, based on 1 mole of the total of nickel, cobalt, manganese, aluminum and doping elements.

4.   The positive electrode active material of claim 2, wherein:
     the doping amount of the B is 0.001 mol to 0.02 mol, based on 1 mol of the total of nickel, cobalt, manganese, aluminum and doping elements.

5.   The positive electrode active material of claim 2, wherein:
     the doping amount of the Zr is 0.001 mol to 0.007 mol, based on 1 mol of the total of nickel, cobalt, manganese, aluminum and doping elements.

6.   The positive electrode active material of claim 2, wherein:
     the doping amount of the Nb and Zr satisfies the relationship of Equation 1 below.

$$[\text{Equation 1}]$$

$$0.5 < [Zr]/[Nb] < 10$$

(In Equation 1, [Nb] and [Zr] refer to the doping amount of each element based on 1 mole of the total sum of nickel, cobalt, manganese, aluminum and doping elements)

7.   The positive electrode active material of claim 2, wherein:
     the doping amount of the Nb and B satisfies the relationship of Equation 2 below.

$$[\text{Equation 2}]$$

$$0.3 < [B]/[Nb] < 30$$

(In Equation 1, [Nb] and [B] mean the doping amount of each element based on 1 mole of the total sum of nickel, cobalt, manganese, aluminum and doping elements)

8. The positive electrode active material of claim 1, wherein:
   the positive electrode active material is represented by Chemical Formula 1 below.

   [Chemical Formula 1]        $Li_a[Ni_xCo_yMn_zAl_h]_{1-t}(Nb_iZr_jB_k)_tO_{2-p}X2_p$

   (In the Chemical Formula 1,

       X is one or more elements selected from the group containing F, N, and P, and Zr
       a is $0.8 \leq a \leq 1.3$,
       t is $0.0061 \leq t \leq 0.057$,
       $0.6 \leq x \leq 0.95$, $0 < y \leq 0.2$, $0 < z \leq 0.2$, $0.008 \leq h \leq 0.029$, $0.0001 \leq i \leq 0.03$, $0.001 \leq j \leq 0.007$, $0.005) \leq k \leq 0.02$,
       and $0 \leq p \leq 0.02$.

9. The positive electrode active material of claim 8, wherein:
   the h is $0.005 \leq h \leq 0.025$ range.

10. The positive electrode active material of claim 1, wherein:
    an initial diffusion coefficient of the positive electrode active material is $7.30*10^{-9}m^2/sec$ to $8.10*10^{-9}m^2/sec$ range.

11. The positive electrode active material of claim 1, wherein:
    a grain size of the metal oxide particle is 1,000Å to 1,560Å.

12. The positive electrode active material of claim 1, wherein:
    a full width at half maximum (FWHM) value for (110) plane of the metal oxide particle ranged from 0.1901 to 0.2017.

13. The positive electrode active material of claim 1, wherein:
    when measuring the X-ray diffraction pattern, the positive electrode active material has a 1.2350 to 1.2410 of I(003)/I(104), which is the ratio of the peak intensity of the (003) plane to the peak intensity of the (104) plane.

14. The positive electrode active material of claim 1, wherein:
    the content of nickel in the metal oxide particle is 0.8 mol or more, based on 1 mol of the total of the nickel, cobalt, manganese, and aluminum.

15. A lithium secondary battery, comprising:

    a positive electrode comprising the positive electrode active material of any one of claims 1 to 14;
    a negative electrode; and
    a non-aqueous electrolyte.

## INTERNATIONAL SEARCH REPORT

| International application No. |
|---|
| **PCT/KR2021/018829** |

| A. | CLASSIFICATION OF SUBJECT MATTER |
|---|---|
| | **H01M 4/525**(2010.01)i; **H01M 4/505**(2010.01)i; **H01M 10/052**(2010.01)i |

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 10/0525(2010.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 니켈(nickel), 코발트(cobalt), 망간(manganese), 알루미늄(aluminum), 도핑 (doping), 니오븀(niobium), 지르코늄(zirconium), 붕소(boron), 리튬 이차전지(lithium secondary battery), 양극 활물질 (positive electrode material)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111435743 A (SVOLT ENERGY TECHNOLOGY COMPANY LIMITED) 21 July 2020 (2020-07-21) | 1,14,15 |
| | See claim 1; paragraphs [0025], [0071] and [0072]; and example 5. | |
| Y | | 2-13 |
| Y | KR 10-2018-0071714 A (POSCO et al.) 28 June 2018 (2018-06-28) | 2-13 |
| | See paragraphs [0032] and [0035]. | |
| Y | KR 10-2019-0078498 A (POSCO et al.) 04 July 2019 (2019-07-04) | 2-13 |
| | See paragraphs [0024] and [0094]. | |
| X | CN 111430700 A (SVOLT ENERGY TECHNOLOGY COMPANY LIMITED) 17 July 2020 (2020-07-17) | 1,14,15 |
| | See claims 1, 3 and 10; and example 1. | |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 March 2022** | **24 March 2022** |

| Name and mailing address of the ISA/KR | Authorized officer |
|---|---|
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2021/018829**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2020-0070650 A (LG CHEM, LTD.) 18 June 2020 (2020-06-18)<br>See entire document. | 1-15 |

Form PCT/ISA/210 (second sheet) (July 2019)

INTERNATIONAL SEARCH REPORT
Information on patent family members

International application No.

**PCT/KR2021/018829**

| Patent document cited in search report | | | Publication date (day/month/year) | Patent family member(s) | | | Publication date (day/month/year) |
|---|---|---|---|---|---|---|---|
| CN | 111435743 | A | 21 July 2020 | KR | 10-2021-0134660 | A | 10 November 2021 |
| | | | | WO | 2021-121168 | A1 | 24 June 2021 |
| KR | 10-2018-0071714 | A | 28 June 2018 | None | | | |
| KR | 10-2019-0078498 | A | 04 July 2019 | CN | 111771303 | A | 13 October 2020 |
| | | | | EP | 3734720 | A1 | 04 November 2020 |
| | | | | JP | 2021-509220 | A | 18 March 2021 |
| | | | | KR | 10-2177049 | B1 | 10 November 2020 |
| | | | | WO | 2019-132332 | A1 | 04 July 2019 |
| CN | 111430700 | A | 17 July 2020 | WO | 2021-068448 | A1 | 15 April 2021 |
| KR | 10-2020-0070650 | A | 18 June 2020 | CN | 113169320 | A | 23 July 2021 |
| | | | | EP | 3869590 | A1 | 25 August 2021 |
| | | | | WO | 2020-122497 | A1 | 18 June 2020 |

Form PCT/ISA/210 (patent family annex) (July 2019)